# EUROPEAN PATENT SPECIFICATION

(11) **EP 2 740 527 B1**
(45) Date of publication and mention of the grant of the patent: **30.11.2016**
(21) Application number: 12811119.2
(22) Date of filing: 13.07.2012
(51) Int. Cl.: B01D 53/62, B01D 53/14, B01D 53/34, C01B 31/20

(54) **METHOD AND DEVICE FOR RECOVERING CARBON DIOXIDE**
VERFAHREN UND VORRICHTUNG ZUR RÜCKGEWINNUNG VON KOHLENDIOXID
PROCÉDÉ ET DISPOSITIF DE RÉCUPÉRATION DE DIOXYDE DE CARBONE

(30) Priority: 13.07.2011 JP 2011154651
(43) Date of publication of application: 11.06.2014
(73) Proprietor: IHI Corporation, Tokyo 135-8710 (JP)
(72) Inventor: OKUNO, Shinya, Tokyo 135-8710 (JP); NAKAMURA, Shiko, Tokyo 135-8710 (JP); MURAKAMI, Atsushi, Tokyo 135-8710 (JP)
(74) Representative: Lamb, Martin John Carstairs
(86) International application number: PCT/JP2012/067930
(87) International publication number: WO 2013/008914

(56) References cited:
- EP-A1- 1 201 290
- EP-A2- 2 269 713
- JP-A- 6 154 554
- JP-A- 10 202 054
- JP-A- 11 137 960
- JP-A- 2001 252 524
- JP-A- 2011 000 529
- US-A1- 2003 045 756

## Description

### Technical Field

The present invention relates to a method of recovering carbon dioxide and a recovery apparatus of carbon dioxide to return a clean gas into the air by separating and recovering carbon dioxide from a gas containing carbon dioxide such as a combustion gas.

### Background Art

A large amount of fuel such as coal, heavy oil and extra heavy oil is used in facilities such as thermal power stations, ironworks and boilers. In regard to sulfur oxide, nitrogen oxide and carbon dioxide discharged by burning of the fuel, quantitative/concentration restriction on emissions has been required from the viewpoint of prevention of air pollution and global environmental protection. In recent years, carbon dioxide has been viewed as a problem as is a major contributor to global warming, and moves to suppress carbon dioxide emissions have been active worldwide. Therefore, various kinds of research have been vigorously conducted in order to enable recovery/storage of carbon dioxide from a combustion exhaust gas or a process exhaust gas instead of emitting carbon dioxide in the air. For example, a PSA (pressure swing adsorption) method, a membrane separation concentration method, and a chemical absorption technique using reaction absorption with a basic compound have been known as a method of recovering carbon dioxide.

In the chemical absorption technique, a basic compound that typically belongs to alkanolamines is mainly used as an absorbent, and the absorbing liquid is circulated in the treatment process thereof, generally, with use of an aqueous solution containing the absorbent as the absorbing liquid, by alternately repeating an absorption step of causing the absorbing liquid to absorb carbon dioxide contained in the gas and a regeneration step of regenerating the absorbing liquid by causing the absorbing liquid to release the absorbed carbon dioxide (see, for example, Patent citation 1 described below). Heating for the release of carbon dioxide is needed in the regeneration step, and it becomes important to reduce energy required for heating/cooling for the regeneration, in order to reduce the operation cost of carbon dioxide recovery.

Water and the absorbent constituting the absorbing liquid are easily vaporized during heating in the regeneration step and wastage of the absorbent by decomposition is also possible. That is, the concentration of the absorbing liquid changes during circulation of the absorption step and the regeneration step and absorption performance is also thereby changed. Thus, methods of managing the concentration of an absorbing liquid have been proposed and, for example, Patent citation 2 describes that the amount of an absorbing liquid is maintained constant by providing a liquid level meter that measures the liquid level of the absorbing liquid and supplying water so that the liquid level is maintained constant at the absorption step. In addition, Patent Citation 3 below describes that the concentration of an amine compound of an absorbing liquid is adjusted by regulating the return temperature of water circulating to an amine recovery portion of an absorption tower or a cooling tower for exhaust gas while liquid level information is received from a liquid level detector, and by controlling the amount of water lost by accompanying an outlet gas of the absorption tower.

### Citation List

### Patent Citations

Patent citation 1: Japanese Patent Application Laid-Open (JP-A) No. 2009-214089
Patent Citation 2: JP-A No. 10-202054
Patent Citation 3: Japanese Patent No. 4523691

### Summary of Invention

### Technical Problem

In the apparatus for recovering carbon dioxide, the introduced exhaust gas and the carbon dioxide recovered therefrom are necessarily discharged from the apparatus and thus it is impossible to entirely avoid fluctuations in the concentration of an absorbing liquid caused by the release of water accompanying the discharge. In addition, with the rising temperature of the absorbing liquid, an amine compound contained in the absorbing liquid as the absorbent is vaporized as well as water, and particularly, heating in the regeneration tower in the release of carbon dioxide to be recovered is likely to release the amine compound together with the vaporized water.

A subject of the present invention is to provide a method of recovering carbon dioxide and a recovery apparatus, capable of recovering carbon dioxide with stability by solving the above problems and detecting a change of the absorbing liquid used for the recovery of carbon dioxide to adjust correspondingly.

Another subject of the present invention is to provide a method of recovering carbon dioxide and a recovery apparatus, which are capable of reducing fluctuations in liquid quality of the absorbing liquid and exhibiting recovery performance of carbon dioxide with stability.

### Technical Solution

To solve the above problems, the inventors found, as a result of intense research, that fluctuations in concentration of an absorbing liquid detected by a liquid level of the absorbing liquid can efficiently be adjusted by using condensate of vapor released by accompanying carbon dioxide recovered from the regeneration step, which led to the completion of the present invention.

According to an aspect of the present invention, a recovery apparatus of carbon dioxide comprises an absorption column configured to bring a gas containing carbon dioxide into contact with an absorbing liquid and to allow the absorbing liquid to absorb the carbon dioxide, a regeneration column that regenerates the absorbing liquid, configured to heat the absorbing liquid having carbon dioxide absorbed in the absorption column to cause the absorbing liquid to release the carbon dioxide, a recovery device that recovers vapor contained in a recovery gas comprising the carbon dioxide discharged from the regeneration column, as condensed water, configured to supply condensed water to the absorbing liquid of the regeneration column at a predetermined flow rate, a liquid level meter that detects a liquid level changing in accordance with quantitative fluctuation of the absorbing liquid, and a restore system configured to supply such an amount of the condensed water from the condensed water recovered by the recovery device to the absorbing liquid near the liquid level meter that, when the liquid level detected by the liquid level meter drops below a predetermined level, the liquid level is restored to the predetermined level.

Also, according to an aspect of the present invention, a method of recovering carbon dioxide, comprises an absorption step of bringing a gas containing carbon dioxide into contact with an absorbing liquid to allow the absorbing liquid to absorb the carbon dioxide, a regeneration step of regenerating the absorbing liquid by heating the absorbing liquid having carbon dioxide absorbed in the absorption step to cause the absorbing liquid to release the carbon dioxide, a recovery step of recovering vapor contained in a recovery gas comprising the carbon dioxide discharged from the regeneration step, as condensed water, to supply condensed water to the absorbing liquid of the regeneration step at a predetermined flow rate, a liquid level detection step of detecting a liquid level changing in accordance with quantitative fluctuation of the absorbing liquid, and a restore step of supplying such an amount of the condensed water from the condensed water recovered at the recovery step to the absorbing liquid near which the liquid level is detected that, when the liquid level detected by the liquid level detection step drops below a predetermined level, the liquid level is restored to the predetermined level.

### Advantageous Effects

According to the present invention, fluctuation in concentration of the absorbing liquid is adjusted by using water condensed and separated from the recovered carbon dioxide in a process of recovering carbon dioxide contained in the gas, and a method of recovering carbon dioxide and a recovery apparatus are thus provided so that the absorbent is inhibited from releasing out of the apparatus, that the absorbing liquid is efficiently adjusted with stability, and that are also useful for inhibiting composition fluctuation of the absorbing liquid and for reducing the operating cost. Since the present invention can be carried out using general facilities and any special equipment or expensive device is unnecessary, economic advantages are provided.

### Brief Description of the Drawings

FIG. 1 is a schematic configuration diagram showing the recovery apparatus of carbon dioxide according to the first embodiment of the present invention.
FIG. 2 is a schematic configuration diagram showing the recovery apparatus of carbon dioxide according to the second embodiment of the present invention.
FIG. 3 is a schematic configuration diagram showing the recovery apparatus of carbon dioxide according to the third embodiment of the present invention.

### Mode for Carrying Out the Invention

In an absorption process of carbon dioxide according to the chemical absorption method, an absorption step in which an absorbing liquid at low temperature is caused to absorb carbon dioxide contained in a gas and a regeneration step in which the absorbing liquid is regenerated by causing the absorbing liquid to release the absorbed carbon dioxide are alternately repeated by circulating the absorbing liquid between the absorption step and the regeneration step. The absorbing liquid in the absorption step generates heat due to absorption of carbon dioxide, and the absorbing liquid in the regeneration step is heated to a high temperature for the release of carbon dioxide. Thus the gas to be discharged in both steps may contain vapor or an absorbent vaporized from the absorbing liquid. Accordingly, the concentration of the absorbing liquid fluctuates during the circulation and, if such fluctuation is left as it is, the amount of carbon dioxide that can be absorbed/released by the absorbing liquid changes, affecting the recovery efficiency of carbon dioxide. Therefore, to maintain the recovery performance of carbon dioxide of the absorbing liquid, it is necessary to detect the change of concentration of the absorbing liquid to make a correction accordingly and it is desirable to make possible continuous measurement in order to precisely grasp the change of concentration.

In the present invention, in view of the above points, a decrease of the absorbing liquid due to evaporation of water vapor is detected as fluctuation of the liquid level and adjustment to the original concentration is made by restoring the amount of the absorbing liquid based on the fluctuation. Condensed water which is separated and recovered by cooling the recovered carbon dioxide released from the regeneration column is used as dilution water for concentration adjustment.

A method of recovering carbon dioxide and a recovery apparatus of the present invention will be described in detail below with reference to the drawings. Here, it is noted that connections depicted by a broken line in the drawings indicate electrical connections.

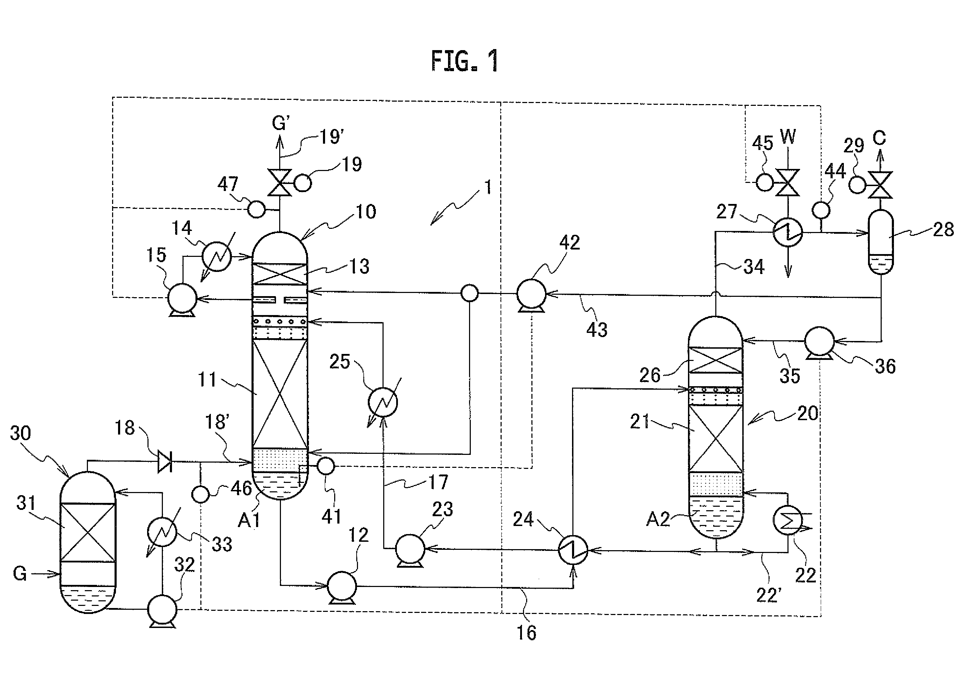

FIG. 1 shows an embodiment of the method of recovering carbon dioxide and a recovery apparatus to implement the method of the present invention. A recovery apparatus 1 comprises an absorption column 10 that brings a gas G containing carbon dioxide into contact with an absorbing liquid to cause the absorbing liquid to absorb carbon dioxide, and a regeneration column 20 that regenerates the absorbing liquid by heating the absorbing liquid to cause the absorbing liquid to release carbon dioxide. Further, a cooling column 30 is provided so that the gas G supplied to the absorption column 10 can easily be maintained at a lower temperature suitable for absorption of carbon dioxide and thus, various gases such as a combustion exhaust gas and a process exhaust gas can be handled and the gas G supplied to the recovery apparatus 1 is not particularly limited. Each of the absorption column 10, the regeneration column 20, and the cooling column 30 is configured as a gas-liquid contact equipment of a countercurrent type, and they hold, in the interiors, fillers 11, 21, 31 for increasing the contact area, respectively. Generally, fillers made of a ferrous metal material such as stainless steel and carbon steel are used as the fillers 11, 21, 31, but are not particularly limited, and a filler made of a material having durability and corrosion resistance in a treatment temperature, and having a shape capable of providing a desired contact area may appropriately be selected. As the absorbing liquid, an aqueous solution containing, as an absorbent, a compound that has an affinity for carbon dioxide such as alkanolamines is used.

The gas G supplied from the bottom of the cooling column 30 passes through the filler 31 held in the column and is cooled by cooling water supplied from an upper portion of the cooling column 30 before being supplied to the absorption column 10. Accordingly, the gas G of saturated humidity or less at the cooling temperature is supplied to the absorption column 10 and the absorption column 10 is possibly prevented from a temperature rise caused by the gas G. The cooling water whose temperature has risen after cooling the gas G is sent to a cooler 33 of water-cooling type by a pump 32 and refluxed to the cooling column 30 after being cooled. Driving of the pump 32 is controlled in accordance with the temperature detected by a temperature sensor 46 which is provided in an airpipe 18' connected to the bottom of the absorption column 10 and, if the temperature of the gas G is too high, the flow rate of the cooling water is increased by the pump 32 to make lower the temperature of the gas G by increased heat exchange effectiveness.

After passing through the cooling column 30, the gas G containing carbon dioxide is supplied to the filler 11 from a lower portion of the absorption column 10 through a check valve 18. On the other hand, the absorbing liquid is supplied to the filler 11 from the upper portion of the absorption column 10. Then, the gas G and the absorbing liquid come into gas-liquid contact while they pass through the filler 11, and carbon dioxide in the gas G is absorbed by the absorbing liquid. The absorbing liquid A1 having absorbed carbon dioxide is accumulated at the bottom of the absorption column 10 and then supplied to the regeneration column 20 by a pump 12 through a supply passage 16 which connects the bottom of the absorption column 10 and the upper portion of the regeneration column 20. The gas G' from which carbon dioxide has been removed is discharged from a top portion of the absorption column 10. The present embodiment is constructed to discharge the gas G' via a pressure control valve 19 and thus, gas pressure in the absorption column 10 can be regulated by the pressure control valve 19 if necessary. If gas-liquid contact is performed with setting the pressurized state, migration of carbon dioxide from the gas G to the absorbing liquid is promoted, improving the absorption rate in accordance with the increase of gas pressure.

Since the temperature of the absorbing liquid is raised by heat produced through the absorption of carbon dioxide, a cooling condensation unit 13 to condense the vapor and the like contained in the gas G' is provided in the top portion of the absorption column 10 as necessity arises, thereby the vapor and the like can be inhibited from leaking out of the column to some extent. To further inhibit the leakage more reliably, a cooler 14 and a pump 15 are attached outside the absorption column and a portion of condensed water (which may contain the gas G' in the column) accumulated below the cooling condensation unit 13 is circulated to and from the cooler 14 by the pump 15. The condensed water, etc. cooled by the cooler 14 and supplied to the column top portion maintains the cooling condensation unit 13 at low temperature and reliably cools the gas G' passing through the cooling condensation unit 13. Driving of the pump 15 is controlled in accordance with the temperature detected by a temperature sensor 47 which is provided in an exhaust pipe 19' of the top portion of the absorption column 10 and, if the temperature of the gas G' is too high, the circulating flow rate of the condensed water is increased by the pump 15 and the cooling at the cooling condensation unit 13 is promoted to lower the temperature of the gas G'. The water condensed by the cooling condensation unit 13 flows down to the filler 11 and composition fluctuation of the absorbing liquid in the column is compensated. The temperature of the gas G' discharged out of the column is preferably about 60°C or less, particularly preferably 45°C or less, and driving of the pump 15 is controlled based on the temperature detected by the temperature sensor 47 so that the temperature thereof be in such temperatures.

The absorbing liquid A1 of the absorption column 10 is supplied via the supply passage 16 to the upper portion of the regeneration column 20 and flows down through the fillers 21 before being accumulated at the bottom thereof. A reboiler is attached to the bottom of the regeneration column 20. That is, a steam heater 22 attached outside the regeneration column 20 to heat the absorbing liquid and a circulation passage 22' to circulate the absorbing liquid via the steam heater 22 are attached, and a portion of an absorbing liquid A2 at the column bottom is shunted to the steam heater 22 through the circulation passage 22' and refluxed into the column after being heated by heat exchange with high-temperature steam. By the heating, carbon dioxide is released from the absorbing liquid at the bottom and the filler 21 is also heated indirectly to promote the release of carbon dioxide by gas-liquid contact on the filler 21.

The absorbing liquid A2 regenerated by releasing carbon dioxide in the regeneration column 20 flows back to the absorption column 10 by a pump 23 through a return passage 17. And in the meantime, it is cooled in the heat exchanger 24 by heat exchange with the absorbing liquid A1 of the supply passage 16 supplied from the absorption column 10 to the regeneration column 20, and it is further cooled sufficiently by a cooler 25 using cooling water to a temperature appropriate for absorption of carbon dioxide.

A gas containing the carbon dioxide released by heat in the regeneration column 20 is discharged as a recovery gas C from the top portion after passing through a condensation section 26 in the upper portion of the regeneration column 20. The condensation section 26 inhibits an excessive release of vapor by condensing the vapor contained in the gas and also inhibits release of the absorbent. The recovery gas C, passing from the top portion of the regeneration column 20 through an exhaust pipe 34, is sufficiently cooled by a cooler 27 using heat exchange with a cooling water while condensing the contained vapor as much as possible, and it is recovered after the condensed water is removed by means of a gas-liquid separator 28. For example, by the infusion of the carbon dioxide contained in the recovered gas C into the ground or an oil field, carbon dioxide fixation and reorganizing can be conducted in the ground. The condensed water separated and recovered by the gas-liquid separator 28 is supplied through a passage 35 to the place above the condensation section 26 of the regeneration column 20 at a predetermined flow rate by a pump 36, to function as cooling water. That is, recovery of vapor is performed by separating from the gas C the vapor evaporated from the absorbing liquid of the regeneration column 20 as condensed water by means of the cooler 27 and the gas-liquid separator 28, and by supplying it to the absorbing liquid of the regeneration column 20 by the pump 36 at a predetermined flow rate, so that the amount of absorbing liquid is maintained on a regular basis. Here, it is noted that the amount of condensed water supplied through a passage 35 can be preset by regulating the driving of the pump 36 using a detection level of a liquid level meter 41 described later.

The amount of the absorbing liquid A1, A2 may decrease while circulating between the absorption column 10 and the regeneration column 20 due to vaporization of water. Particularly, fluctuations in the amount of liquid are likely to occur in connection with changes of settings of treatment conditions and the like, fluctuations in temperature of the exhaust gas to be treated, and fluctuations in outside air temperature and in that case, the temperature of a gas leading through the exhaust pipe 34 to the gas-liquid separator 28 is also likely to fluctuate. The present invention is constructed to be capable of dealing with unscheduled or unexpected fluctuations in the amount of the absorbing liquid. Specifically, a temperature sensor 44 to detect the temperature of the gas flowing into the gas-liquid separator 28, a flow regulating valve 45 electrically connected the temperature sensor 44, and a pump 42 to supply the condensed water of the gas-liquid separator 28 to the absorption column are provided, and the flow regulating valve 45 is controlled based on the detected temperature of the temperature sensor 44 and, if the detected temperature rises or falls, the cooling efficiency of the cooler 27, that is, the flow rate of cooling water is adjusted by regulating the opening of the flow regulating valve 45 so that the temperature of the recovery gas is shifted to an appropriate temperature. If vaporization from the absorbing liquid proceeds, the liquid level meter 41 in the absorption column 10 detects a decrease in liquid level corresponding to a decrease in the amount of the absorbing liquid circulating in the apparatus, and it sends a control signal to the pump 42, which is electrically connected to the liquid level meter 41, to drive the pump 42 so that the condensed water in the gas-liquid separator 28 is supplied from a passage 43 to the upper portion or the lower portion of the absorption column 10. In addition, the cooling efficiency is improved by regulating the opening of the flow regulating valve 45 to increase the flow rate of cooling water W flowing through the cooler 27, and the temperature of the recovered gas C is thereby lowered, leading to an increased amount of condensed water collected by the gas-liquid separator 28 and a decreased amount of vapor in the recovered gas C. Further, if necessity arises, the amount of release of vapor is also decreased by regulating driving of the pump 15 to lower the temperature of the discharged gas G' from the absorption column 10. The pump 42 is driven until the liquid level of the absorbing liquid detected by the liquid level meter 41 is restored and thus, the condensed water of the amount necessary for restoring the lowered liquid level to its original level is shunted from the gas-liquid separator 28 and is additionally supplied to the absorption column 10. Therefore, a major portion of the condensed water of the gas-liquid separator 28 is used as a steady recovery portion for compensating a decrease by heating regeneration of the absorbing liquid and the remaining portion of the condensed water is used for irregular restoration by a temporary supply corresponding to a decrease of the absorbing liquid caused by changes of conditions or the like.

In some cases, the liquid level of the absorbing liquid may rise due to the gas G introduced into the absorption column 10. Specifically, if more amount of moisture is introduced into the absorption column 10 due to the rise in temperature of the gas G, water condensed by cooling in the apparatus is added to the absorbing liquid and an increase in the amount of liquid and a decrease in concentration of the absorbent are caused with rise of the liquid level. In such a case, without driving of the pump 42, excess amount of water is drawn out from the gas-liquid separator 28 and driving of the pump 32 is controlled in order to improve the cooling efficiency of the cooling column 30. If necessary, water vapor is further released out of the apparatus by controlling the driving of the pump 15 so that the cooling efficiency of the cooler 14 declines. In such a manner, the liquid level is restored. As described above, while condensed water of the gas-liquid separator 28 is mainly refluxed to the regeneration column 20 at a constant flow rate, the liquid level can also be restored by controlling the pump 36 to temporarily decrease the amount of reflux to the regeneration column 20.

In regard to the absorbent contained in the absorbing liquid, there is a necessity to replenish it for a decrease caused by decomposition by heat, exhaustion or the like. In order to inhibit the replenishment from being excessive, it is necessary to prevent the absorbent from escaping from the recovery apparatus 1. Since the absorbent is relatively easily contained in the recovery gas discharged from the regeneration column 20, it is important to recover and reflux the water and the absorbent from the recovery gas C into the apparatus and it is meaningful to use the condensed water separated from the recovery gas C as a replenishing water for liquid amount/concentration adjustment of the absorbing liquid. If the condensed water of the gas-liquid separator 28 is supplied to upper portion of the absorption column 10, the condensed water advantageously inhibits vaporization of the absorbing liquid by cooling the filler 11 and the gas G', and it then flows down on the filler 11 together with the water and the absorbent condensed by the cooling condensation unit 13.

In the embodiment shown in FIG. 1, the liquid level meter 41 is provided at the bottom of the absorption column 10 and driving of the pump 42 is controlled so that the liquid level is maintained constant in response to changes of the liquid level of the absorbing liquid A1 accumulated at the bottom thereof. However, the liquid level meter can be installed in other places. For example, a liquid reservoir to temporarily accumulate the absorbing liquid may be provided somewhere in the passages 16, 17 through which the absorbing liquid circulates so that the supply of condensed water is controlled by detecting the liquid level of the absorbing liquid therein by a liquid level meter.

In the embodiment shown in FIG. 1, the condensed water of the gas-liquid separator 28 is supplied to the absorption column 10 to which the liquid level meter 41 is attached and thus, the result thereof is reflected in the detection of the liquid level meter 41 relatively early and the restoration of liquid amount of the absorbing liquid is detected relatively quickly. If further priority is given to the reflection in the liquid level meter 41, the condensed water may be supplied to a place closer to the liquid level meter 41, that is, to the lower portion of the absorption column 10, more specifically, to a place below the filler 11, so that the condensed water is directly added to the absorbing liquid A1 accumulated at the bottom of the absorption column 10 and it is immediately reflected in the liquid level. Therefore, this is the most favorable in terms of immediate responsiveness of the liquid level meter 41. Alternatively, for example, the liquid level meter 41 may be attached to a liquid reservoir which is provided somewhere in the passages 16, 17 in such a manner that the liquid level fluctuates in response to the amount of the absorbing liquid circulating through the apparatus, while the condensed water of the gas-liquid separator 28 is supplied direct to the liquid reservoir. Embodiments having the liquid reservoir will be described later.

In the recovery apparatus of carbon dioxide, a plurality of coolers are used to regulate the temperatures of the gas and the absorbing liquid, and the coolers 14, 25, 27, 33 are installed in the embodiment shown in FIG. 1. For these coolers, it is necessary to set them separately to have a suitable temperature respectively. In the embodiment shown in FIG. 1, the cooling temperature of the cooler 27 is suitably adjusted as described above and, since the adjustments are made by regulating the cooling efficiency by changing the flow rate of the cooling water W, namely, heat exchanger effectiveness, there is thus no need to change the temperature of the cooling water W itself. Therefore, even if the set temperature of the cooler 27 and the set temperature of other coolers are different, cooling by the coolers 14, 25, 33 can be provided by using the same cooling water as that of the cooler 27 in a single refrigerant system. If the coolers 14, 25, 33 are similarly configured to control the flow rate of the cooling water by using a flow regulating valve as necessity arises, their adjustments can individually be made to different cooling efficiencies, that is, different cooling temperatures. The coolers of the present embodiment are water-cooled systems, but a cooling system using another refrigerant may be used alternatively and the cooling power may be enhanced by using a refrigeration cycle with refrigerant.

In the recovery apparatus of FIG. 1, the pressure control valve 19 and a pressure control valve 29 are provided in the exhaust pipes 19', 34 of the absorption column 10 and the regeneration column 20 respectively and configured to be able to regulate the pressure, if necessary, by pressurizing the insides of the absorption column 10 and the regeneration column 20. However, they may be omitted when set to the atmospheric pressure.

The recovery method executed in the recovery apparatus 1 in FIG. 1 will be described.

When the gas G containing carbon dioxide such as a combustion exhaust gas or a process exhaust gas is supplied from the bottom in the absorption column 10 and an absorbing liquid is supplied from above, the gas G and the absorbing liquid come into gas-liquid contact on the filler 11 and carbon dioxide is absorbed by the absorbing liquid. Since carbon dioxide is absorbed satisfactorily at low temperature, the temperature of the absorbing liquid or the temperature of the absorption column 10 (particularly the filler 11) is adjusted so as to be generally about 50°C or less, preferably 40°C or less. The absorbing liquid is heated due to absorption of carbon dioxide and it is thus desirable to prevent the liquid temperature from rising over 60°C, in consideration of the rise in liquid temperature caused by the absorption. The gas G supplied to the absorption column 10 is also adjusted, in consideration of the above, to an appropriate temperature by the cooling column 30. As the absorbing liquid, an aqueous solution containing a compound having affinity for carbon dioxide is used as an absorbent. The gas pressure in the absorption column 10 is set to atmospheric pressure, but, if it is necessary to increase the carbon dioxide recovery of the absorbing liquid, the pressure may be adjusted to a pressure exceeding the atmospheric pressure that is in a range of about 120 kPaG or less, preferably in a pressure range of about 10 to 100 kPaG, by the pressure control valve 19. Examples of the absorbent include alkanolamines and hindered amines having an alcoholic hydroxyl group. More specifically, for example, monoethanolamine, diethanolamine, triethanolamine, methyldiethanolamine, di-isopropanolamine, and diglycolamine can be illustrated as alkanolamine, and 2-amine-2 methyl-1-propanol (AMP), 2-(methylamino)ethanol (EAE), and 2-(methylamino)ethanol (MAE) can be illustrated as hindered amine having an alcoholic hydroxyl group. In general, monoethanolamine (MEA) is favorably used and plural kinds from the above examples may be mixed. The concentration of the absorbent in the absorbing liquid can appropriately be set in accordance with an amount of carbon dioxide contained in the gas to be treated, a treatment speed, and the like. Considering fluidity and suppression of a consumption loss of the absorbing liquid, and the like, typically the concentration of about 10 to 50% by mass is applied and, for example, an absorbing liquid having the concentration of about 30% by mass is suitably used for treatment of the gas G having carbon dioxide content of about 20% by mass. The supply rate of the gas G and the absorbing liquid are appropriately set such that the absorption can sufficiently proceeds, in accordance with the amount of carbon dioxide contained in the gas, gas-liquid contact efficiency and the like.

When the absorbing liquid A1 that has absorbed carbon dioxide is supplied to the regeneration column 20, the absorbing liquid A1 is heated to a high temperature in the vicinity of the boiling point. Here, it is noted that, since the absorbing liquid A1 before being supplied to the regeneration column 20 is subjected to heat exchange in a heat exchanger 24 with the absorbing liquid A2 that returns from the regeneration column 20, the absorbing liquid A1 has an increase in temperature close to the heating temperature in the generation column 20 and it is then introduced into the regeneration column 20 in a state in which carbon dioxide is easily released. In this embodiment, the absorbing liquid A1 is introduced into the regeneration column 20 at about 90 to 115°C. Then releasing of carbon dioxide is facilitated by gas-liquid contact on the filler 21, while the temperature rise and the release of carbon dioxide further proceed due to heating at the bottom of the regeneration column 20. The absorbing liquid A2 accumulated at the bottom thereof is heated up to the vicinity of boiling point by partial circulation heating, and the boiling point of the absorbing liquid depends on the composition (absorbent concentration) and the pressure inside the regeneration column 20. At this point, latent heat of water vaporization lost from the absorbing liquid and sensible heat of the absorbing liquid are necessary to be supplied and, if pressure is applied for suppression of vaporization, sensible heat increases due to the rise of the boiling point. In consideration of the balance of the above points, the absorbing liquid is normally heated to 120 to 130°C when the pressure inside the regeneration column 20 is increased to about 100 kPaG.

In a steady state of the above recovery treatment, adjustment by the flow rate regulation of cooling water by drive management of the pump 32 and the pump 15 is performed based on the temperature sensor 46 and the temperature sensor 47, so that the temperature of the gas G introduced from the cooling column 30 into the absorption column 10 becomes a temperature of 30 to 60°C and the temperature of the gas G' discharged from the absorption column 10 becomes 30 to 60°C, respectively. Since the temperature of the upper portion of the regeneration column 20 is close to that of the introduced absorbing liquid A1, the flow rate of cooling water W is regulated by the opening of the flow regulating valve 45 based on the temperature of the recovery gas C detected by the temperature sensor 44 so that the recovery gas after passing through the condensation section 26 is sufficiently cooled by the cooler 27 and the temperature of the recovery gas C becomes a temperature of 30 to 60°C. Water and the absorbent condensed from the recovery gas C are separated from the recovery gas C by the gas-liquid separator 28 and supplied to the condensation section 26 to cool the condensation section 26 and also to inhibit the rise in concentration of the absorbing liquid in the regeneration column 20 and vaporization/dissipation of the absorbent. In the steady state, the condensed water is supplied at a fixed flow rate from the gas-liquid separator 28 to the condensation section 26, while the condensed water accumulated in the gas-liquid separator 28 is approximately constant. If the condensed water were supplied to the regeneration column 20 excessively, degradation in regeneration efficiency of the absorbing liquid could be caused by lowered temperature in the regeneration column 20, but the configuration as described above that basically maintains constant the supply of condensed water to the regeneration column 20 is meaningful to prevent concentration of the absorbing liquid while avoiding degradation in regeneration efficiency. The temperature (generally, about 40 to 50°C) of condensed water separated from the recovery gas C is rather a temperature suitable to the supply to the absorption column 10, particularly to the supply to the absorbing liquid A1 at the bottom. Therefore, the embodiment in which the condensed water of the gas-liquid separator 28 is supplied occasionally to the absorption column 10 is a convenient form without causing any problem of energy efficiency.

If a decrease in liquid level of the absorbing liquid A1 is detected by the liquid level meter 41, the condensed water of the gas-liquid separator 28 is supplied to the absorption column 10 by driving the pump 42, and the condensed water recovered by the gas-liquid separator increases due to an increased amount of cooling water passing through the cooler 27. When the detected liquid level is restored to the predetermined level, the pump 42 is stopped. Conversely, if a rise in liquid level of the absorbing liquid A1 is detected, the excess water of the gas-liquid separator 28 is drained and the temperature of the gas G passing through the air pipe 18' is lowered by increasing the cooling efficiency of the cooler 33 by means of drive management of the pump 32. And, as necessity arises, the temperature of the gas G' discharged from the absorption column 10 is raised to increase the water vapor released accompanying the gas. In this way, the liquid level of the absorbing liquid A1 is restored. After the liquid level is restored to the predetermined level, the temperature of the gas G' can be brought back to its original temperature. Generally, the change width of the temperature of the gases G, G' and the recovered gas C that may be changed to adjust the liquid level is preferably about 5°C or less.

In the above configuration, the storage structure of the regeneration column 20 is designed so that the liquid level of the absorbing liquid A2 at the bottom of the regeneration column 20 is maintained constant regardless of fluctuations in the liquid amount. Accordingly, the fluctuations in the liquid amount of the whole absorbing liquid circulating in the apparatus appear intensively as fluctuations in the liquid level of the absorbing liquid A1 accumulated at the bottom of the absorption column 10. As the amount changes of the absorbing liquid appear intensively in the liquid level of one place as described above, it is possible to detect sharply the amount changes of the absorbing liquid by the liquid level meter 41.

In this manner, the absorbing liquid circulates between the absorption column 10 and the regeneration column 20 and the absorption step and the regeneration step are alternately repeated, while the amount and concentration of the absorbing liquid is maintained by regulating the liquid level of the absorbing liquid.

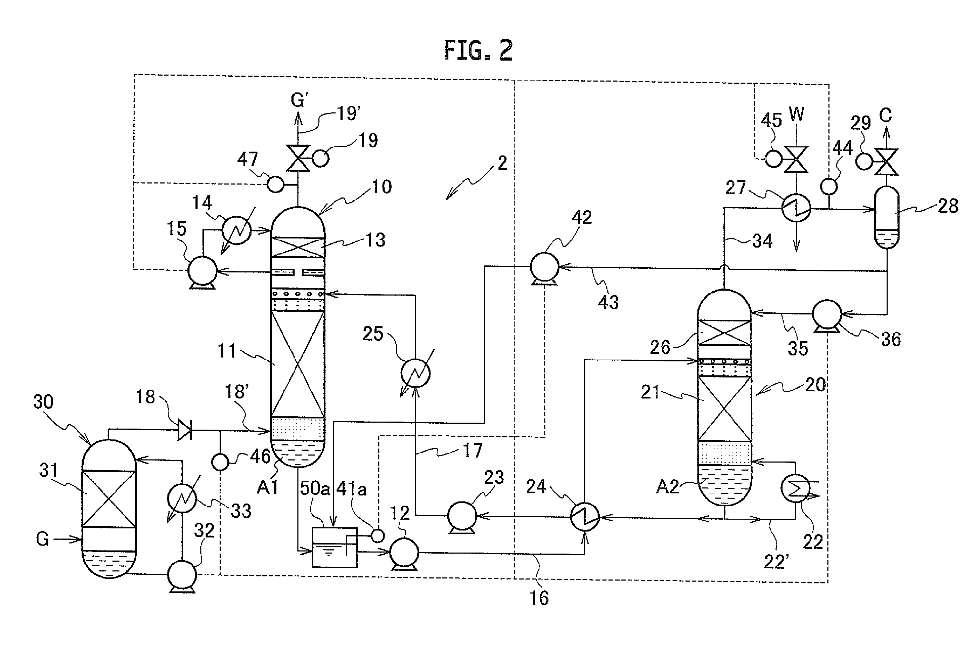

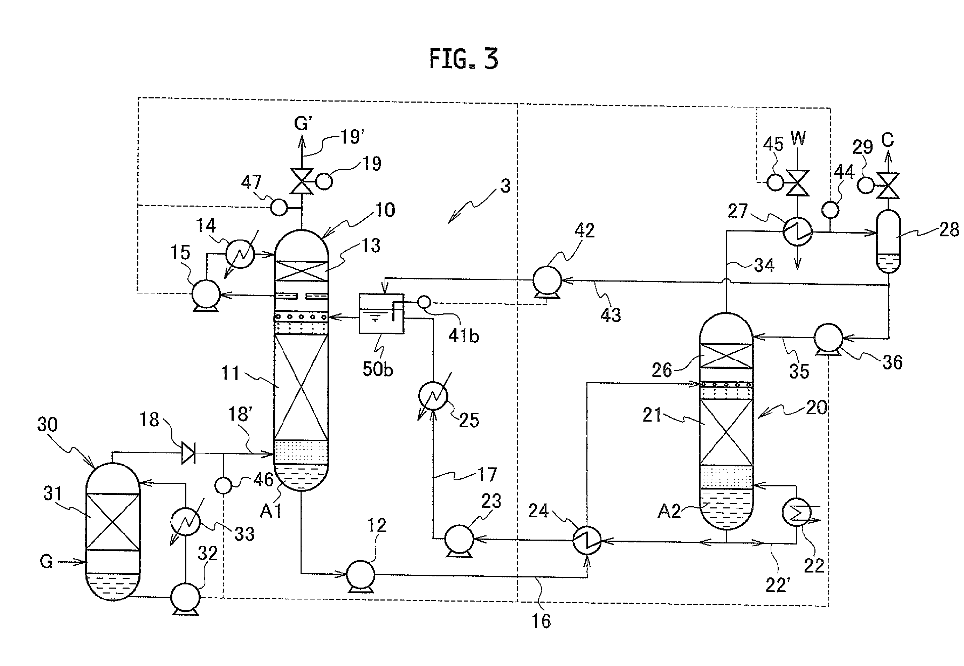

FIGS. 2 and 3 show embodiments of recovery apparatus in which the liquid level meter 41 is installed in a liquid reservoir provided in a passage allowing the absorbing liquid to circulate. In a recovery apparatus 2 of FIG. 2, a liquid reservoir 50a is provided in the passage 16 between the absorption column 10 and the pump 12 so that the absorbing liquid A1 supplied from the absorption column 10 to the regeneration column 20 is temporarily accumulated in the liquid reservoir 50a, and a liquid level meter 41a detects the liquid level of the absorbing liquid in the liquid reservoir 50a so as to supply the condensed water of the gas-liquid separator 28 to the liquid reservoir 50a by driving the pump 42 in response to a decrease in the detection. In a recovery apparatus 3 of FIG. 3, a liquid reservoir 50b is provided in the passage 17 between the pump 23 and the absorption column 10 so that the absorbing liquid A2 supplied from the regeneration column 20 to the absorption column 10 is temporarily stored in the liquid reservoir 50b, and a liquid level meter 41b detects the liquid level of the absorbing liquid in the liquid reservoir 50b so as to supply the condensed water of the gas-liquid separator 28 to the liquid reservoir 50b by driving the pump 42 in response to a decrease in the detection. Here, it is noted that the liquid reservoir 50b, which is arranged between the cooler 25 and the absorption column 10 in the embodiment shown in FIG. 3, may also be arranged between the pump 23 and the cooler 25.

In the embodiments shown in FIGS. 2 and 3, the absorption column 10 and the regeneration column 20 are designed, respectively, so that the liquid level of the absorbing liquid at the bottom can be maintained constant regardless of fluctuations in the amount of liquid. Accordingly, fluctuations in the liquid amount of the whole absorbing liquid circulating in the apparatus appear intensively as fluctuations in the liquid level of the absorbing liquid accumulated in each of the liquid reservoirs 50a, 50b. The liquid level maintained constant at each bottom of the absorption column 10 and the regeneration column 20 can be realized appropriate by using a known structure or control technique. For example, an overflow structure may be applied to the bottom of the column so that the absorbing liquid exceeding a certain amount is discharged from the absorption column 10 and the regeneration column 20, or such configuration may be applied to regulate the driving of the pumps 12, 23, using a liquid level meter to detect the liquid level of the absorbing liquid at the bottom, so as to maintain the liquid level constant in accordance with the detection level. The absorbing liquid flowing down along the absorption column 10 may be set to be discharged all into the passage 16 without being stored at the bottom (that is, the liquid level becomes zero).

In the configurations of FIGS. 2 and 3, the dimensions/shape and the arrangement of the liquid reservoirs 50a, 50b can be determined regardless of the layout and column diameter of the absorption column 10 and the regeneration column 20 and thus, the configurations of level detection using the liquid reservoirs 50a, 50b are useful in that the design can easily be changed to improve the precision with which fluctuations in the amount of the absorbing liquid are detected. In the configuration as shown in FIGS. 2 and 3 in which the condensed water is supplied to the absorbing liquid before or after being supplied to the absorption column 10, the temperature of the condensed water and that of the absorbing liquid are close to each other and thus, the configuration is advantageous in terms of thermal energy when compared with a configuration in which the condensed water is supplied in a position close to the regeneration column 20. This advantage can be obtained by providing a liquid reservoir in a passage between the absorption column 10 and the heat exchanger 24.

### Industrial Applicability

The present invention is possibly used in treatment of a gas containing carbon dioxide discharged from facilities such as a thermal power station, an ironworks, and a boiler, and is useful in reduction of carbon dioxide emission and damage to the environment. A recovery apparatus of carbon dioxide capable of reducing the cost required for treatment of recovering carbon dioxide, and contributing to the energy saving and the environmental protection is possibly provided.

## Claims

1. A recovery apparatus (1, 2, 3) of carbon dioxide comprising:
an absorption column (10) configured to bring a gas (G) containing carbon dioxide into contact with an absorbing liquid (A2) and to allow the absorbing liquid (A2) to absorb the carbon dioxide;
a regeneration column (20) that regenerates the absorbing liquid (A1), configured to heat the absorbing liquid (A1) having carbon dioxide absorbed in the absorption column (10) to cause the absorbing liquid (A1) to release the carbon dioxide;
a recovery device (27, 28, 36) that recovers vapor contained in a recovery gas (C) comprising the carbon dioxide discharged from the regeneration column (20), as condensed water, configured to supply condensed water to the absorbing liquid (A1) of the regeneration column (20) at a predetermined flow rate;
a liquid level meter (41, 41a, 41b) that detects a liquid level changing in accordance with quantitative fluctuation of the absorbing liquid (A2); and
a restore system (42, 43) configured to supply such an amount of the condensed water from the condensed water recovered by the recovery device to the absorbing liquid (A2) near the liquid level meter (41, 41a, 41b) that, when the liquid level detected by the liquid level meter (41, 41a, 41b) drops below a predetermined level, the liquid level is restored to the predetermined level.

2. The recovery apparatus (1, 2, 3) of carbon dioxide according to claim 1, wherein the liquid level meter (41, 41a, 41b) detects the liquid level in the absorption column (10), and the restore system (42, 43) supplies the condensed water to the absorption column (10).

3. The recovery apparatus (1, 2, 3) of carbon dioxide according to claim 2, wherein the absorbing liquid (A1) is accumulated at a bottom of the absorption column (10) while circulating between the absorption column (10) and the regeneration column (20), and the liquid level meter (41, 41a, 41b) is attached to the absorption column (10) to detect the liquid level of the absorbing liquid (A1) accumulated at the bottom of the absorption column (10), the restore system (42, 43) adds the condensed water to the absorbing liquid (A1) accumulated at the bottom of the absorption column (10).

4. The recovery apparatus (1, 2, 3) of carbon dioxide according to claim 1, further comprising: a passage (16, 17) allowing the absorbing liquid (A1, A2) to circulate between the absorption column (10) and the regeneration column (20); and a liquid reservoir (50a, 50b) provided in the passage (16, 17) to accumulate the absorbing liquid (A2), wherein the liquid level meter (41, 41a, 41b) is provided in the liquid reservoir (50a, 50b) so as to detect the liquid level changing in the liquid reservoir (50a, 50b) in accordance with the quantitative fluctuation of the absorbing liquid (A2).

5. The recovery apparatus (1, 2, 3) of carbon dioxide according to any of claims 1 to 4, wherein the recovery device (27, 28, 36) comprises a cooler (27) that condenses the vapor by cooling the recovery gas (C) through heat exchange with a refrigerant (W), and a flow regulating valve (45) capable of regulating a flow rate of the refrigerant (W) supplied to the cooler (27), wherein a cooled temperature of the recovery gas (C) by the cooler (27) is adjusted by regulating the flow rate of the refrigerant (W) by the flow regulating valve (45).

6. A method of recovering carbon dioxide, comprising:
an absorption step of bringing a gas (G) containing carbon dioxide into contact with an absorbing liquid (A2) to allow the absorbing liquid (A2) to absorb the carbon dioxide;
a regeneration step of regenerating the absorbing liquid (A1) by heating the absorbing liquid (A1) having carbon dioxide absorbed in the absorption step to cause the absorbing liquid (A1) to release the carbon dioxide;
a recovery step of recovering vapor contained in a recovery gas (C) comprising the carbon dioxide discharged from the regeneration step, as condensed water, to supply condensed water to the absorbing liquid (A1) of the regeneration step at a predetermined flow rate;
a liquid level detection step of detecting a liquid level changing in accordance with quantitative fluctuation of the absorbing liquid (A2); and
a restore step of supplying such an amount of the condensed water from the condensed water recovered at the recovery step to the absorbing liquid (A2) near which the liquid level is detected that, when the liquid level detected by the liquid level detection step drops below a predetermined level, the liquid level is restored to the predetermined level.

7. The method of recovering carbon dioxide according to claim 6, wherein the liquid level detected at the liquid level detection step is a liquid level at the absorption step, and the condensed water at the restore step is supplied to the absorbing liquid (A2) in the absorption step.

8. The method of recovering carbon dioxide according to claim 6 or 7, wherein the recovery step comprises a cooling step of cooling the recovery gas (C) by heat exchange with a refrigerant (W), and a regulating step of regulating a flow rate of the refrigerant (W) supplied to the cooling step, and a cooled temperature of the recovery gas (C) at the cooling step is adjusted by regulating the flow rate of the refrigerant (W).

9. The method of recovering carbon dioxide according to claim 6, further comprising: a circulation step of circulating the absorbing liquid (A1, A2) between the absorption column (10) and the regeneration column (20), wherein the liquid level detection step comprises a step of storing the absorbing liquid (A2) in the circulation step in a liquid reservoir (50a, 50b), and detecting the liquid level that changes in the liquid reservoir (50a, 50b) in accordance with the quantitative fluctuations of the absorbing liquid (A2).

## Patentansprüche

1. Rückgewinnungsvorrichtung (1, 2, 3) für Kohlendioxid, die Folgendes umfasst:
eine Absorptionskolonne (10), die dafür konfiguriert ist, ein Gas (G), das Kohlendioxid enthält, in Berührung mit einer absorbierenden Flüssigkeit (A2) zu bringen und zu ermöglichen, dass die absorbierende Flüssigkeit (A2) das Kohlendioxid absorbiert,
eine Regenerationskolonne (20), welche die absorbierende Flüssigkeit (A1) regeneriert, dafür konfiguriert, die absorbierende Flüssigkeit (A1), die in der Absorptionskolonne (10) Kohlendioxid absorbiert hat, zu erhitzen, um zu veranlassen, dass die absorbierende Flüssigkeit (A1) das Kohlendioxid freisetzt,
eine Rückgewinnungseinrichtung (27, 28, 36), die Dampf, der in einem Rückgewinnungsgas (C) enthalten ist, welches das aus der Regenerationskolonne (20) abgegebene Kohlendioxid umfasst, als kondensiertes Wasser zurückgewinnt dafür konfiguriert, der absorbierenden Flüssigkeit (A1) der Regenerationskolonne (20) kondensiertes Wasser mit einer vorbestimmten Durchflussgeschwindigkeit zuzuführen,
einen Flüssigkeitspegelmesser (41, 41a, 41b), der einen Flüssigkeitspegel erfasst, der sich entsprechend Mengenschwankungen der absorbierenden Flüssigkeit (A2) ändert, und
ein Wiederherstellungssystem (42, 43), das dafür konfiguriert ist, der absorbierenden Flüssigkeit (A2) nahe dem Flüssigkeitspegelmesser (41, 41a, 41b) eine solche Menge an kondensiertem Wasser aus dem durch die Rückgewinnungseinrichtung zurückgewonnenen kondensierten Wasser zuzuführen, dass, wenn der durch den Flüssigkeitspegelmesser (41, 41a, 41b) erfasste Flüssigkeitspegel unter einen vorbestimmten Pegel abfällt, der Flüssigkeitspegel auf den vorbestimmten Pegel wiederhergestellt wird.

2. Rückgewinnungsvorrichtung (1, 2, 3) für Kohlendioxid nach Anspruch 1, wobei der Flüssigkeitspegelmesser (41, 41a, 41b) den Flüssigkeitspegel in der Absorptionskolonne (10) erfasst und das Wiederherstellungssystem (42, 43) das kondensierte Wasser der Absorptionskolonne (10) zuführt.

3. Rückgewinnungsvorrichtung (1, 2, 3) für Kohlendioxid nach Anspruch 2, wobei die absorbierende Flüssigkeit (A1) an einem Boden der Absorptionskolonne (10) gesammelt wird, während es zwischen der Absorptionskolonne (10) und der Regenerationskolonne (20) umläuft, und der Flüssigkeitspegelmesser (41, 41a, 41b) an der Absorptionskolonne (10) befestigt ist, um den Flüssigkeitspegel der am Boden der Absorptionskolonne (10) gesammelten absorbierenden Flüssigkeit (A1) zu erfassen, wobei das Wiederherstellungssystem (42, 43) das kondensierte Wasser der am Boden der Absorptionskolonne (10) gesammelten absorbierenden Flüssigkeit (A1) hinzugibt.

4. Rückgewinnungsvorrichtung (1, 2, 3) für Kohlendioxid nach Anspruch 1, die ferner Folgendes umfasst: einen Durchgang (16, 17), der es ermöglicht, dass die absorbierende Flüssigkeit (A1, A2) zwischen der Absorptionskolonne (10) und der Regenerationskolonne (20) umläuft, und ein Flüssigkeitsreservoir (50a, 50b), das in dem Durchgang (16, 17) bereitgestellt wird, um die absorbierende Flüssigkeit (A2) zu sammeln, wobei der Flüssigkeitspegelmesser (41, 41a, 41b) in dem Flüssigkeitsreservoir (50a, 50b) bereitgestellt wird, um so den Flüssigkeitspegel zu erfassen, der sich in dem Flüssigkeitsreservoir (50a, 50b) entsprechend der Mengenschwankung der absorbierenden Flüssigkeit (A2) ändert.

5. Rückgewinnungsvorrichtung (1, 2, 3) für Kohlendioxid nach einem der Ansprüche 1 bis 4, wobei die Rückgewinnungseinrichtung (27, 28, 36) einen Kühler (27), der den Dampf durch das Kühlen des Rückgewinnungsgases (C) durch Wärmeaustausch mit einem Kältemittel (W) kondensiert, und ein Durchflussregelventil (45), das dazu in der Lage ist, eine Durchflussgeschwindigkeit des dem Kühler (27) zugeführten Kältemittels (W) zu regulieren, wobei eine Temperatur des durch den Kühler (27) gekühlten Rückgewinnungsgases (C) durch das Regulieren der Durchflussgeschwindigkeit des Kältemittels (W) durch das Durchflussregelventil (45) eingestellt wird.

6. Verfahren zur Rückgewinnung von Kohlendioxid, das Folgendes umfasst:
einen Absorptionsschritt des Bringens eines Gases (G), das Kohlendioxid enthält, in Berührung mit einer absorbierenden Flüssigkeit (A2), um zu ermöglichen, dass die absorbierende Flüssigkeit (A2) das Kohlendioxid absorbiert,
einen Regenerationsschritt des Regenerierens der absorbierenden Flüssigkeit (A1) durch das Erhitzen der absorbierenden Flüssigkeit (A1), die in der Absorptionskolonne Kohlendioxid absorbiert hat, um zu veranlassen, dass die absorbierende Flüssigkeit (A1) das Kohlendioxid freisetzt,
einen Rückgewinnungsschritt des Zurückgewinnens von Dampf, der in einem Rückgewinnungsgas (C) enthalten ist, welches das aus dem Regenerationsschritt abgegebene Kohlendioxid umfasst, als kondensiertes Wasser, um der absorbierenden Flüssigkeit (A1) der Regenerationskolonne kondensiertes Wasser mit einer vorbestimmten Durchflussgeschwindigkeit zuzuführen,
einen Flüssigkeitspegelerfassungsschritt des Erfassens eines Flüssigkeitspegels, der sich entsprechend Mengenschwankungen der absorbierenden Flüssigkeit (A2) ändert, und
einen Wiederherstellungsschritt, des Zuführens einer solchen Menge an kondensiertem Wasser aus dem bei dem Rückgewinnungsschritt zurückgewonnenen kondensierten Wasser der absorbierenden Flüssigkeit (A2) nahe welcher der Flüssigkeitspegel erfasst wird, dass, wenn der durch den Flüssigkeitspegel-Erfassungsschritt erfasste Flüssigkeitspegel unter einen vorbestimmten Pegel abfällt, der Flüssigkeitspegel auf den vorbestimmten Pegel wiederhergestellt wird.

7. Verfahren zur Rückgewinnung von Kohlendioxid nach Anspruch 6, wobei der bei dem Flüssigkeitspegel-Erfassungsschritt erfasste Flüssigkeitspegel ein Flüssigkeitspegel bei dem Absorptionsschritt ist und das kondensierte Wasser bei dem Wiederherstellungsschritt der absorbierenden Flüssigkeit (A2) in dem Absorptionsschritt zugeführt wird.

8. Verfahren zur Rückgewinnung von Kohlendioxid nach Anspruch 6 oder 7, wobei der Wiederherstellungsschritt einen Kühlungsschritt des Kühlens des Rückgewinnungsgases (C) durch Wärmeaustausch mit einem Kältemittel (W), und einen Regulierungsschritt des Regulierens einer Durchflussgeschwindigkeit des dem Kühlungsschritt zugeführten Kältemittels (W) umfasst und eine Temperatur des bei dem Kühlungsschritt gekühlten Rückgewinnungsgases (C) durch das Regulieren der Durchflussgeschwindigkeit des Kältemittels (W) eingestellt wird.

9. Verfahren zur Rückgewinnung von Kohlendioxid nach Anspruch 6, das ferner Folgendes umfasst: einen Umlaufschritt des Umlaufens der absorbierenden Flüssigkeit (A1, A2) zwischen der Absorptionskolonne (10) und der Regenerationskolonne (20), wobei der Flüssigkeitspegel-Erfassungsschritt einen Schritt des Speicherns der absorbierenden Flüssigkeit (A2) in dem Umlaufschritt in einem Flüssigkeitsreservoir (50a, 50b) und das Erfassen des Flüssigkeitspegels, der sich in dem Flüssigkeitsreservoir (50a, 50b) entsprechend der Mengenschwankung der absorbierenden Flüssigkeit (A2) ändert, umfasst.

## Revendications

1. Appareil de récupération (1, 2, 3) de dioxyde de carbone, comprenant :
une colonne d'absorption (10) configurée pour amener un gaz (G) contenant du dioxyde de carbone en contact avec un liquide absorbant (A2) et pour permettre au liquide absorbant (A2) d'absorber le dioxyde de carbone ;
une colonne de régénération (20) qui régénère le liquide absorbant (A1), configurée pour chauffer le liquide absorbant (A1) présentant du dioxyde de carbone absorbé dans la colonne d'absorption (10) afin d'amener le liquide absorbant (A1) à libérer le dioxyde de carbone ;
un dispositif de récupération (27, 28, 36) qui récupère de la vapeur contenue dans le gaz de récupération (C) comprenant le dioxyde de carbone déchargé de la colonne de régénération (20), sous forme d'eau de condensation, configuré pour fournir de l'eau de condensation au liquide absorbant (A1) de la colonne de régénération (20) à un débit prédéterminé ;
un dispositif de mesure de niveau de liquide (41, 41a, 41b) qui détecte une modification du niveau de liquide en fonction d'une fluctuation quantitative du liquide absorbant (A2) ; et
un système de restauration (42, 43) configuré pour fournir au liquide absorbant (A2) à proximité du dispositif de mesure de niveau de liquide (41, 41a, 41b) une quantité d'eau de condensation, provenant de l'eau de condensation récupérée grâce au dispositif de récupération, telle que, lorsque le niveau de liquide détecté par le dispositif de mesure du niveau de liquide (41, 41a, 41b) descend en dessous d'un niveau prédéterminé, le niveau du liquide est restauré au niveau prédéterminé.

2. Appareil de récupération (1, 2, 3) de dioxyde de carbone selon la revendication 1, dans lequel le dispositif de mesure de niveau de liquide (41, 41a, 41b) détecte le niveau de liquide dans la colonne d'absorption (10), et le système de restauration (42, 43) fournit l'eau de condensation à la colonne d'absorption (10).

3. Appareil de récupération (1, 2, 3) de dioxyde de carbone selon la revendication 2, dans lequel le liquide absorbant (A1) s'accumule au niveau d'un fond de la colonne d'absorption (10) tout en circulant entre la colonne d'absorption (10) et la colonne de régénération (20), et le dispositif de mesure de niveau de liquide (41, 41a, 41b) est attaché à la colonne d'absorption (10) afin de détecter le niveau de liquide du liquide absorbant (A1) accumulé au fond de la colonne d'absorption (10), et le système de restauration (42, 43) ajoute l'eau de condensation au liquide absorbant (A1) accumulé au fond de la colonne d'absorption (10).

4. Appareil de récupération (1, 2, 3) de dioxyde de carbone selon la revendication 1, comprenant en outre : un passage (16, 17) permettant au liquide absorbant (A1, A2) de circuler entre la colonne d'absorption (10) et la colonne de régénération (20) ; et un réservoir de liquide (50a, 50b) fourni dans le passage (16, 17) afin d'accumuler le liquide absorbant (A2), dans lequel le dispositif de mesure de niveau de liquide (41, 41a, 41b) est fourni dans le réservoir de liquide (50a, 50b) de manière à détecter la modification de niveau de liquide dans le réservoir de liquide (50a, 50b) en fonction de la fluctuation quantitative du liquide absorbant (A2).

5. Appareil de récupération (1, 2, 3) de dioxyde de carbone selon l'une quelconque des revendications 1 à 4, dans lequel le dispositif de récupération (27, 28, 36) comprend un dispositif refroidisseur (27) qui condense la vapeur en refroidissant le gaz de récupération (C) par l'intermédiaire d'un échange thermique avec un réfrigérant (W), et une vanne de régulation de débit (45) capable de réguler un débit du réfrigérant (W) fourni au dispositif refroidisseur (27), dans lequel une température, abaissée grâce au dispositif refroidisseur (27), du gaz de récupération (C) est ajustée en régulant le débit du réfrigérant (W) grâce à la vanne de régulation de débit (45).

6. Procédé de récupération de dioxyde de carbone, comprenant :
une étape d'absorption consistant à amener un gaz (G) contenant du dioxyde de carbone en contact avec un liquide absorbant (A2) afin de permettre au liquide absorbant (A2) d'absorber le dioxyde de carbone ;
une étape de régénération consistant à régénérer le liquide absorbant (A1) en chauffant le liquide absorbant (A1) présentant du dioxyde de carbone absorbé dans l'étape d'absorption afin d'amener le liquide absorbant (A1) à libérer le dioxyde de carbone ;
une étape de récupération consistant à récupérer de la vapeur contenue dans un gaz de récupération (C) comprenant le dioxyde de carbone déchargé à l'étape de régénération, sous forme d'eau de condensation, afin de fournir de l'eau de condensation au liquide absorbant (A1) de l'étape de régénération à un débit prédéterminé ;
une étape de détection de niveau de liquide consistant à détecter une modification de niveau de liquide en fonction d'une fluctuation quantitative du liquide absorbant (A2) ; et
une étape de restauration consistant à fournir au liquide absorbant (A2) à proximité duquel est détecté le niveau de liquide une quantité d'eau de condensation, provenant de l'eau de condensation récupérée à l'étape de récupération, telle que, lorsque le niveau de liquide détecté à l'étape de détection de niveau de liquide descend en dessous d'un niveau prédéterminé, le niveau de liquide est restauré au niveau prédéterminé.

7. Procédé de récupération de dioxyde de carbone selon la revendication 6, dans lequel le niveau de liquide détecté à l'étape de détection de niveau de liquide est un niveau de liquide à l'étape d'absorption, et l'eau de condensation à l'étape de restauration est fourni au liquide absorbant (A2) lors de l'étape d'absorption.

8. Procédé de récupération de dioxyde de carbone selon la revendication 6 ou 7, dans lequel l'étape de récupération comprend une étape de refroidissement consistant à refroidir le gaz de récupération (C) grâce à un échange thermique avec un réfrigérant (W), et une étape de régulation consistant à réguler un débit du réfrigérant (W) fourni à l'étape de refroidissement, et une température abaissée du gaz de récupération (C) à l'étape de refroidissement est ajustée en régulant le débit du réfrigérant (W).

9. Procédé de récupération de dioxyde de carbone selon la revendication 6, comprenant en outre : une étape de circulation consistant à faire circuler le liquide absorbant (A1, A2) entre la colonne d'absorption (10) et la colonne de régénération (20), dans lequel l'étape de détection de niveau de liquide comprend une étape consistant à stocker le liquide absorbant (A2) à l'étape de circulation dans un réservoir de liquide (50a, 50b), et à détecter le niveau de liquide qui se modifie dans le réservoir de liquide (50a, 50b) en fonction des fluctuations quantitatives du liquide absorbant (A2).
